# EUROPEAN PATENT SPECIFICATION

(11) **EP 4 560 245 B1**
(45) Date of publication and mention of the grant of the patent: **01.04.2026**
(21) Application number: 23211366.2
(22) Date of filing: 22.11.2023
(51) Int. Cl.: F28F 1/02, F28D 21/00, F28F 9/26, F28D 1/053, H01M 10/60, F28F 9/02, F28F 9/04, H01M 10/613, H01M 10/6556

(54) **A HEAT EXCHANGER**
WÄRMETAUSCHER
ECHANGEUR DE CHALEUR

(43) Date of publication of application: 28.05.2025
(73) Proprietor: Valeo Electrification, 95892 Cergy Pontoise (FR)
(72) Inventor: FERNANDEZ, Roberto, 50120 Zaragoza (ES); JIMENEZ, Jesus, 50120 Zaragoza (ES); MALLEN, Alberto, 50120 Zaragoza (ES)
(74) Representative: Valeo Powertrain Systems

(56) References cited:
- EP-A1- 4 138 176
- US-A- 5 318 114
- US-A1- 2007 039 717
- US-A1- 2023 238 607

## Description

### TECHNICAL FIELD

The present invention relates to a heat exchanger, particularly, the present invention relates to a battery cooler for cooling batteries used in an electric vehicle.

### BACKGROUND

Generally, a battery cooler is a heat exchanger that includes a tube and a tank. The tube is an extruded micro-channel tube formed with multiple channels for flow of coolant there through. The tank either is a single-piece construction or is formed by joining a pair of tank portions / panels. The extruded tube, particularly extreme end portions of the extruded tube are received and joined to the respective tanks for fluid communication between the extruded tube and the respective tanks. The portion of the tube between the end portions of the tube follow a wave pattern, so that when multiple tubes with respective tanks are arranged facing each other along a first direction in spaced apart configuration, battery-accommodating spaces for receiving the batteries, particularly, cylindrical batteries to be cooled, are formed between crests of adjacent tubes facing each other.

A heat exchanger according to the preamble of claim 1 is disclosed in document EP 4 138 176 A1.

The micro-channels of the extruded tube follow either an I-pattern or U-pattern to configure either an I-flow or U-flow of the coolant through the extruded tube. In case of I-flow configuration, open extreme ends of the extruded tubes are received in separate tank assemblies disposed opposite and spaced apart from each other along an axis of the extruded tube. In case of U-flow configuration, open ends of the microchannel tubes, particularly, the first set of microchannel tubes and the second set of microchannel tubes are on same side and are received in separate enclosures configured in a single tank on same side of the extruded tube, wherein a partition wall disposed inside the tank defines separate enclosures in the tank. Specifically, in case of U-flow configuration, a single tank is disposed on one side of the extruded tube. Further, the connectors configuring fluid communication between inlet and outlet lines and the single tank for ingress and egress of coolant with respect to the tank are secured to the single tank. Also, the partition wall disposed within the single tank is either inherently formed in case the tank is formed by joining two tank portions or is required to be secured to the tank by using a joining process. In case the tank is formed by joining two panels or tank portions, the panels or the tank portions are also required to be joined and the tank portions inherently configure the partition when joined to each other. The various elements, such as the connectors and the partition wall are joined to the tank by brazing. Also, the tank portions / panels forming the tank are joined by brazing. Further, the first set of micro-channel tubes and the second set of micro-channel tubes are also secured to the respective first and second enclosures of the tank by brazing. Accordingly, the tank is subjected to joining at various different sites.

Generally, laser welding is preferred over brazing for joining the various components of the heat exchanger, as laser welding is comparatively faster than brazing. Further, laser welding does not involve energy losses and is comparatively cheaper and convenient compared to brazing, as usage of large furnace is prevented and number of, jigs and fixtures is reduced. However, the space constraints due to many components being joined on the tank renders the laser welding inconvenient. Due limited space availability on the tank, due to space constrains, the connectors are closely disposed with respect to each other on the tank. Generally, the connectors are already secured to the tank portions before the tank portions are joined for forming the tank. Also, some of the connectors are having comparatively larger radial dimension or conflicting features and complex geometries that act as blockages, thereby preventing the laser beam from reaching areas of the tank where welding is to be performed and rendering the laser welding inconvenient. The tank portions are welded along at least a portion of the periphery of the connectors, however, the large connectors block the laser beam from reaching the welding zone. Accordingly, the further welding of the tank portions for forming the tank is inconvenient. Further, such placement of the connectors in limited space cause problem in defining the welding trajectories for joining the tank portions by welding and the welding trajectories may interfere with each other and cause other problems such as overheating during welding that lead to thermal stresses and welding defects such as hot cracking.

Accordingly, there is a need for a heat exchanger and a method of assembling thereof that overcomes the problems faced in laser welding of components of the heat exchanger due to other components blocking laser beams from reaching the weld zone. Further, there is a need for a heat exchanger and a method of assembling thereof that ensures well defined and non-interfering welding trajectories, thereby preventing overheating during welding and problems such as thermal stress and welding defects such as hot cracking caused due to the thermal stresses.

### SUMMARY

A heat exchanger is disclosed in accordance with the invention as defined in claim 1.

The heat exchanger includes at least one tank and at least one tube. Particularly, the tank includes a first tank portion and second tank portion. The first tank portion is of planar configuration and extends along a plane of the tank. The second tank portion is complementary to the first tank portion. The first tank portion and the second tank portion are joined to define a first enclosure and a second enclosure between opposite walls of the tank and separate from each other. The first and second enclosure having a closed end and an open end. Further, the tank is formed with a first connector and a second connector on a first wall for ingress and egress of fluid with respect to the first and the second enclosures. Further, the tank is formed with a third connector and a fourth connector on a second wall opposite to the first wall for ingress and egress of fluid with respect to the first and the second enclosures. The first connector and the fourth connector are disposed on the opposite walls of the tank. Similarly, the second connector and the third connector are also disposed on the opposite walls of the tank. The first connector and the third connector being of comparatively larger radial dimension than the respective fourth connector and the second connector. The tube includes a first set of channels and a second set of channels that are received and joined to open ends of the first and the second enclosures respectively. The second connector and the fourth connector are disposed on opposite walls of the tank. The first tank portion and the second tank portion are joined to each other by welding along a first welding trajectory and a second welding trajectory along at least a portion of a periphery of the second connector and the fourth connector. Such configuration of the welding trajectories along periphery of the second connector and the fourth connector provides unobstructed reach of the laser beam along the first welding trajectory and the second welding trajectory and ensure well defined and non-interfering welding trajectories

Generally, the first tank portion and the second tank portion comprises complementary engaging elements respectively adapted to pre-assemble the first tank portion and the second tank portion before joining the same by laser welding.

Particularly, the first tank portion and the second tank portion are joined to each other to define a partition centrally disposed with respect to the tank to define the first and second enclosure of the tank, the first enclosure and the second enclosure are symmetrical about the partition.

Specifically, each tank portion is formed with a pair of spaced complementary recesses corresponding to the first and second connectors to define the first and second enclosures and the partition, when the first and second tank portions are joined to each other with the recesses facing each other.

Preferably, the first connector and the second connector are joined to the first tank portion by laser welding.

Similarly, the fourth connector and the third connector are joined to the second tank portion by laser welding.

Specifically, the tube is an extruded tube comprising the first set of channels joined to and in fluid communication with the first enclosure and the second set of channels joined to and in fluid communication with the second enclosure.

Generally, the first tank portion and the second tank portion are joined to each other by welding along the first and the second welding trajectories configured on different walls of the tank and overlapping each other in different planes and between the first and the second connectors.

Particularly, outwardly facing side of tank portions define the opposite walls of the tank when the first and second tank portions are joined to each other.

Further, the first tank portion and the second tank portion are joined to each other by laser welding.

Also is disclosed a method of assembling a heat exchanger according to claim 10. The method includes the steps of pre-assembling a first tank portion and a second tank portion to configure a pre-assembly of a tank. The pre-assembly of the tank is formed with first and second connectors formed on one side thereof and third and fourth connectors formed on opposite side thereof. Thereafter, the method includes a step of joining the first tank portion to the second tank portion to form the tank. The method includes the step of joining the first tank portion to the second tank portion by welding along a first welding trajectory along at least a portion of a periphery of a second connector abutting a first wall of the tank opposite to a second wall. Thereafter, the first tank portion is joined to the second tank portion by welding along a second welding trajectory along at least a portion of periphery of a fourth connector abutting the second wall of the tank opposite to the first wall. The second connector and the fourth connector being comparatively smaller than the respective third connector and the first connector allows the laser beam to reach the weld zone without obstruction. Simultaneously, the method involves the step of forming a partition to divide an interior of the tank into a first and a second enclosure when the first tank portion is joined to the second tank portion. The method further includes the step of receiving a first and a second set of channels of a tube in open ends of the respective first and second enclosures. Thereafter, the method includes the step of joining the first and a second set of channels inside the respective first and second enclosures.

### BRIEF DESCRIPTION

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG.1 illustrates an exploded view of a heat exchanger, particularly, a battery cooler, in accordance with an embodiment of the present invention;
FIG. 2 illustrates an isometric view of the heat exchanger of FIG. 1 in assembled configuration;
FIG. 3 illustrates an isometric view of a tank of the heat exchanger of FIG. 1 with first and second connectors secured to one wall of the tank;
FIG. 4 illustrates an isometric view of a panel or a tank portion of a pair of panels or tank portions that are joined together for configuring the tank of FIG. 3 and depicting details of the tank portions;
FIG. 5 illustrates a pair of adjacent tubes with respective tanks defining battery accommodating space there-between to receive batteries to be cooled;
FIG. 6 illustrates a front isometric view of tank of FIG. 5 depicting a first welding trajectory along at least a portion of periphery of a second connector disposed on a first side of the tank;
FIG. 7 illustrates a rear isometric view of tank of FIG. 5 depicting a second welding trajectory along at least a portion of periphery of a fourth connector disposed on a second side of the tank;
FIG. 8a illustrates the first side of the tank with the first welding trajectory;
FIG. 8b illustrates second side of the tank with the second welding trajectory; and

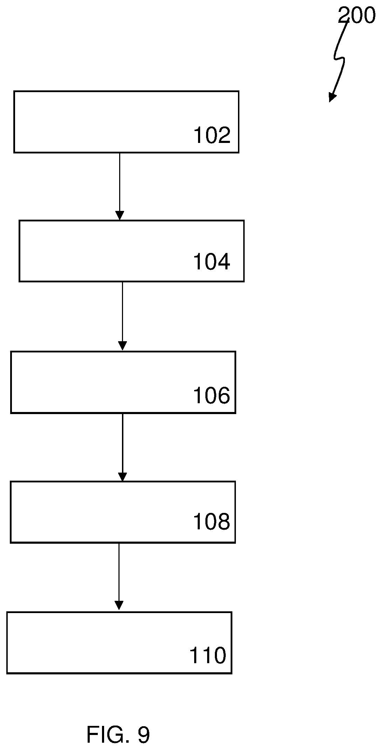

FIG. 9 illustrates a block diagram depicting the various steps of the method of assembling a battery cooler in accordance with an embodiment of the present invention.

### DETAILED DESCRIPTION

It must be noted that the figures disclose the invention in a detailed enough way to be implemented, said figures helping to better define the invention if needs be. The invention should however not be limited to the embodiment disclosed in the description.

Although the present invention is explained with example of a battery cooler for cooling of the batteries used in a vehicle, wherein a tank of the battery cooler is formed by joining two separate tank portions by laser welding. Each of the tank portions include connectors already secured thereto. The large connectors with conflicting features obstructs the laser beam and prevents the laser beam from reaching the welding zone/site for welding the tank portions to each other. The tank portions are welded along at least a portion of periphery of smaller connectors disposed on opposite sides of the tank. Such configuration of defining the welding trajectories along at least a portion of periphery of the smaller connectors allows the laser beam to reach the weld zone without being obstructed. Further, tank of the battery cooler formed by joining two tank portions with the welding trajectories along at least a portion of periphery of the smaller connectors defines non-interfering welding trajectories to form secure welding joint between the tank portions. However, the present invention is also applicable for any device used in vehicular and non-vehicular environment, wherein components of the device are required to be joined to each other by laser welding without any obstruction to the laser beam from reaching the welding zone .

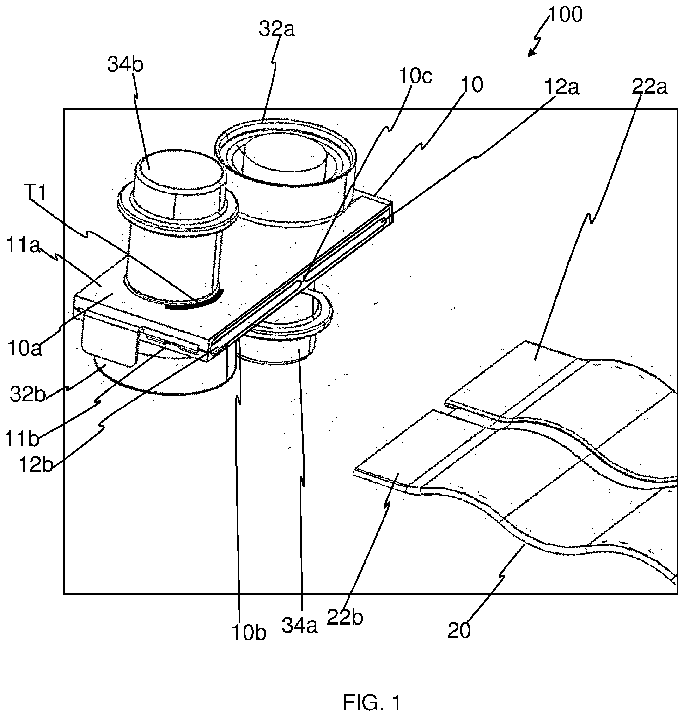

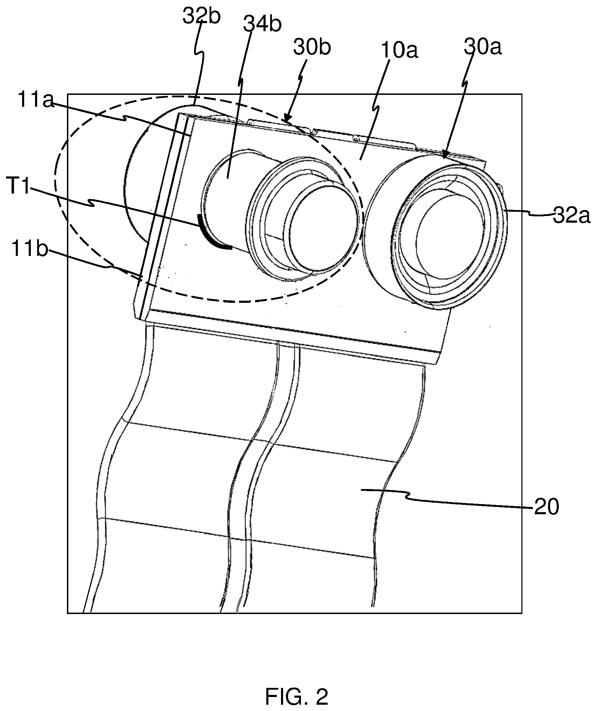

The present invention envisages a heat exchanger, for example, a battery cooler for cooling batteries used in a vehicle. FIG. 1 illustrates an exploded view of a heat exchanger, particularly, a battery cooler 100 in accordance with an embodiment depicting arrangement and connection between various elements thereof. FIG. 2 illustrates an isometric view of the battery cooler 100 in assembled configuration thereof. The battery cooler 100 includes at least one tank 10 and at least one extruded tube 20. A first side of the tank 10 is formed with at least a pair of spaced apart first and second connectors 32a and 34b on a first wall 10a of the tank 10. The opposite side of the tank 10 is formed with another pair of spaced apart third and fourth connectors 32b and 34a on a second wall 10b of the tank 10.

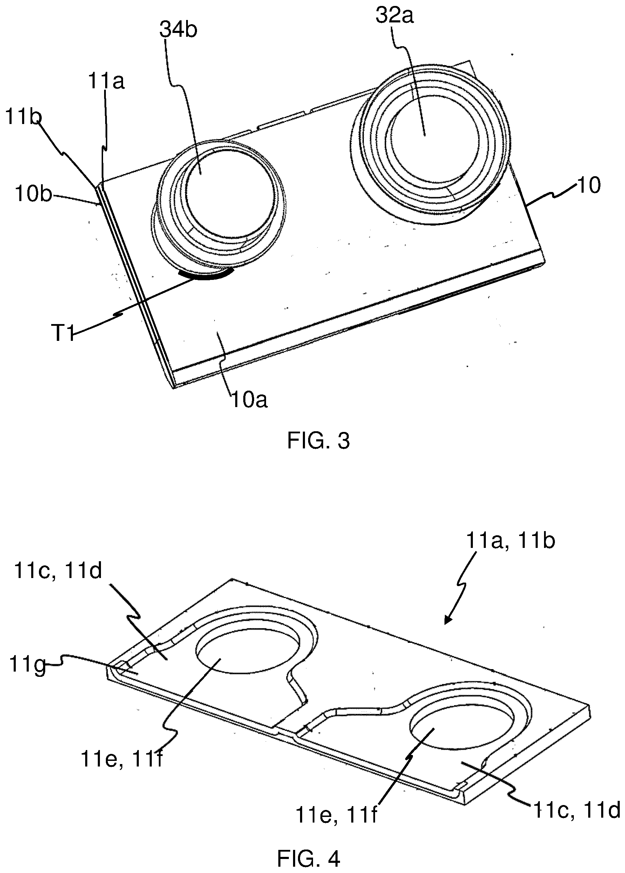

FIG. 3 illustrates an isometric view of the tank 10 formed with the spaced apart connectors 32a and 34b. The tank 10 is formed by joining a pair of panels or tank portions 11a and 11b, referred to as a first tank portion 11a and a second tank portion 11b. The tank 10 is generally of metal and the first tank portion 11a and the second tank portion 11b of metal are joined by welding, particularly, laser welding. The first tank portion 11a is of planar construction that extends along the plane of the tank 10. The second tank portion 11b is complementary to the first tank portion 11b. The first tank portion 11a and the second tank portion 11b are connected to each other in overlapping configuration, with at least a portion of the first tank portion 11a overlapping the second tank portion 11b. The first tank portion 11a and the second tank portion 11b optionally comprises complementary engaging elements 13a and 13b respectively adapted to pre-assemble the first tank portion 11a and the second tank portion 11b before joining the same by welding to form the tank 10. The complementary engaging elements 13a and 13b are formed along the periphery of the first tank portion 11a and the second tank portion 11b respectively. The first tank portion 11a and the second tank portion 11b are joined to define a first enclosure 12a, a second enclosure 12b and a partition 10c separating the first enclosure 12a and the second enclosure 12b. The first enclosure 12a and the second enclosure 12b are disposed between opposite walls 10a and 10b of the tank 10, wherein outwardly facing sides of tank portions 11a and 11b define the opposite walls 10a and 10b of the tank 10 when the first and second tank portions 11a and 11b are joined to each other. More specifically, each of the first tank portion 11a and the second tank portion 11b are formed with a pair of spaced complementary recesses 11c and 11d respectively as illustrated in FIG. 4. The first tank portion 11a includes first spaced recesses 11c and the second tank portion 11b includes second spaced recesses 11d complementary to the first spaced recesses 11c. The first spaced recesses 11c on the first tank portion 11a are aligned with respect to the second spaced recesses 11d on the second tank portion 11b to configure the first and second enclosures 12a and 12b respectively, when the first tank portion 11a and the second tank portion 11b are joined to each other. Further, the spacing between the first spaced recesses 11c formed on the first tank portion 11a inherently forms a raised platform that abuts against another raised platform inherently formed between the second spaced recesses 11d formed on the second tank portion 11a to configure the partition 10c between the first enclosure 12a and the second enclosure 12b, when the first tank portion 11a and the second tank portion 11b are joined to each other. The panels or the tank portions 11a and 11b also includes respective spaced openings 11e and 11f that are aligned to each other when the panels or the tank portions 11a and 11b are joined to each other. Particularly, the spaced openings 11e formed on the first panel or the tank portion 11a are aligned to the spaced openings 11f formed in the second panel or the tank portions 11b, when the panels or tank portions 11a and 11b are joined to each other.

Each of the first and second enclosures 12a and 12b are having a closed end and an open end as illustrated in FIG. 1. Generally, the partition 10c is centrally formed within the tank 10 and the first enclosure 12a and the second enclosure 12b are symmetrical about the partition 10c. Alternatively, the partition 10c is offset from the center of the tank 10 and the first and second enclosures 12a and 12b are asymmetrical about the partition 10c. The open ends of the tank 10, particularly, entrance to the first and second enclosures 12a, 12b formed by cooperating portions 11g of the panels 11a and 11b that are wider to permit insertion of the first and second set of channels 22a, 22b.

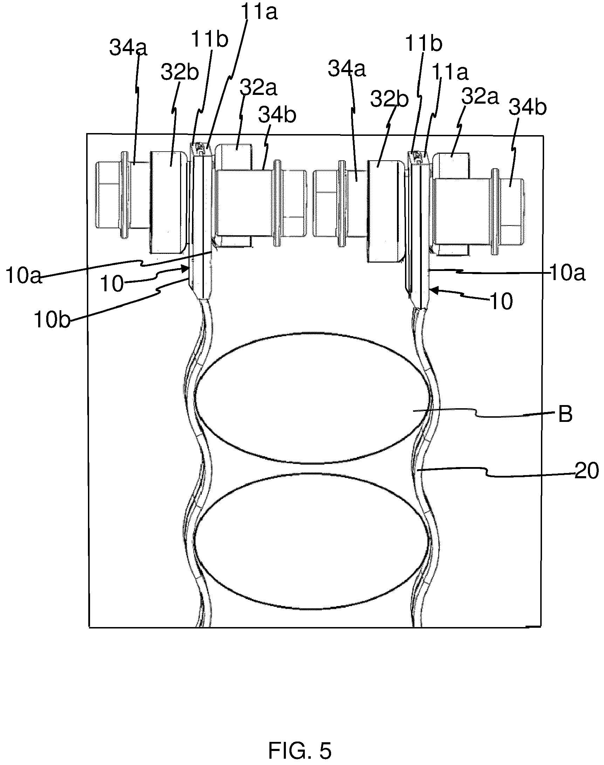

The tube 20 is an extruded tube that includes a first set of channels 22a and a second set of channels 22a received and joined to the first and the second enclosures 12a and 12b respectively. Generally, the extruded tube 20 received in the opening of the tank 10 is secured thereto by laser welding along periphery of the opening of the tank 10. The portion of the tube 20 between the end portions follow a wave pattern. Such configuration of the tube 20 configures battery-accommodating spaces for receiving the batteries B to be cooled between crests of adjacent tubes 20 facing each other when multiple tubes 20 with respective tanks 10 are disposed adjacent to one another along a first direction in spaced apart configuration, as illustrated in FIG.5.

The first connector 32a and the second connector 34b secured to the first wall 10a of the tank 10 is for ingress and egress of fluid, particularly, for the ingress and egress of the coolant with respect to the first and the second enclosures 12a and 12b respectively. The first connector 32a configures fluid communication between an inlet conduit and a first enclosure for supplying coolant to the tank 10. The second connector 34b configures fluid communication between an outlet conduit and the second enclosure for egress of the coolant from the tank 10. In one embodiment, the first connector 32a is for ingress of coolant to the first enclosure 12a. The coolant collected in the first enclosure 12a is distributed thereby to the first set of channels 22a. In one embodiment, the first set of channels 22a are connected to and fluid communication with the second set of channels 22b at the distal end thereof to configure u-flow of the coolant between the first set of channels 22a and the second set of channels 22b. The coolant undergoes heat exchange and extracts heat from batteries disposed between adjacent tubes 20 as the coolant flows through the first set of the channels 22a and the second set of channels 22b. The heated coolant after passing through the first set of channels 22a and the second set of channels 22b is collected in the second enclosure 12b. The coolant collected in the second enclosure 12b egresses therefrom through the second connector 34b. Similarly, the third connector 32b and the fourth connector 34a is for ingress and egress of fluid, particularly, for the ingress and egress of the coolant with respect to the first and the second enclosures 12a and 12b respectively.

The first connector 32a and the fourth connector 34a are aligned and in fluid communication with the first enclosure 12a and disposed on the opposite walls 10a and 10b of the tank 10 respectively. Similarly, the second connector 34b and the third connector 32b of the second pair of connectors 30b are aligned and in fluid communication with second enclosure 12b and disposed on the opposite walls 10b and 10a of the tank 10 respectively. In one embodiment, the first connector 32a and the second connector 34b are joined to the first tank portion 11a by laser welding. Similarly, the fourth connector 34a and the third connector 32b are joined to the second tank portion 11b by laser welding. Particularly, the first connector 32a is disposed on the first sidewall 10a, while the fourth connector 34a is disposed on the second side wall 10b opposite to the first side wall 10a. Further, the third connector 32b is disposed on the second side wall 10b while the second connector 34b is disposed on the first side wall 10a opposite to the second side wall 10b. The first connector 32a and the second connector 34b are abutting the first wall 10a. Similarly, the second fourth connector 34a and the third connector 32b are abutting the second wall 10a. The first connector 32a and third connector 32b are of comparatively larger radial dimension than the fourth connector 34a and second connector 34b.

In accordance with one embodiment, the first connector 32a and the third connector 32b include radially extending collars that shield the respective walls 10a and 10b of the tank 10 adjacent thereto, thereby preventing laser beam from reaching to the interface between the tank 10 and the respective first connector 32a and the third connector 32b. Such configuration of the first connector 32a and the third connector 32b covers the region of the tank 10, thereby rendering it difficult to configure welding trajectories along the periphery of the first connector 32a and the third connector 32b. The large size of the first connector 32a and third connector 32b renders performing welding between the first and second tank portions 11a and 11b along the periphery of the of the first connector 32a and the third connector 32b difficult. The intricate geometry of the first connector 32a and the third connector 32b prevents the laser beam from reaching the welding sites at the interface of the tank 10 and the first connector 32a and the third connector 32b, thereby rendering the welding the first and second tank portions 11a and 11b difficult.

More specifically, with such configuration of the first connector 32a and the third connector 32b, the welding trajectories has to follow torturous path as the first connector 32a and the third connector 32b act as obstruction to the welding. The laser beam is having limited access to the regions on the first and second tank portions 11a and 11b that are to be welded. Accordingly, welding of the first and second tank portions 11a and 11b along at least a portion of the periphery of the first connector 32a and the third connector 32b is inconvenient. Also, with welding, particularly, laser welding required at multiple sites on the limited surface of the tank 10, for example, welding for joining the first and second tank portions / panels 11a, 11b for configuring the tank 10, for securing the extruded tube 20 within the tank 10, particularly, for securing the first and second set of channels 22a, 22b in the respective first and second enclosures 12a, 12b of the tank 10 involve various problems. For example, laser welding at multiple sites in limited space may cause problem in defining the welding trajectories and the welding trajectories may interfere with each other and cause other problems such as overheating during welding that lead to thermal stresses and welding defects such as hot cracking.

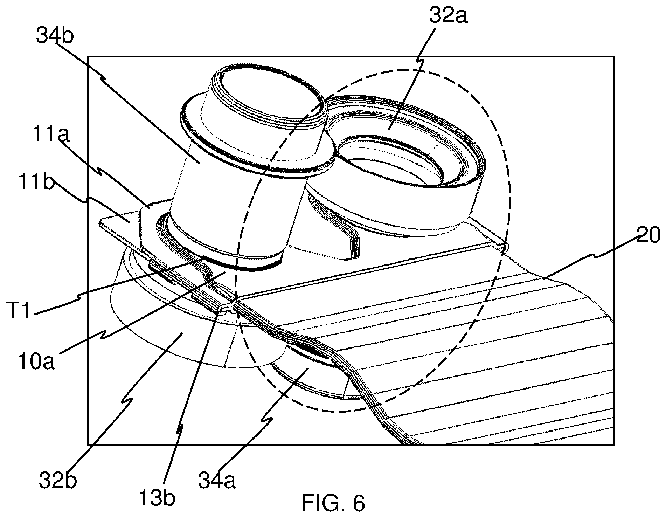

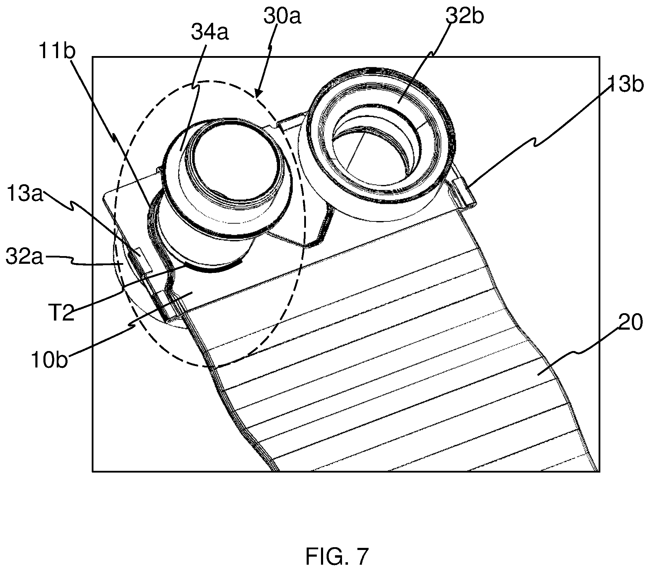

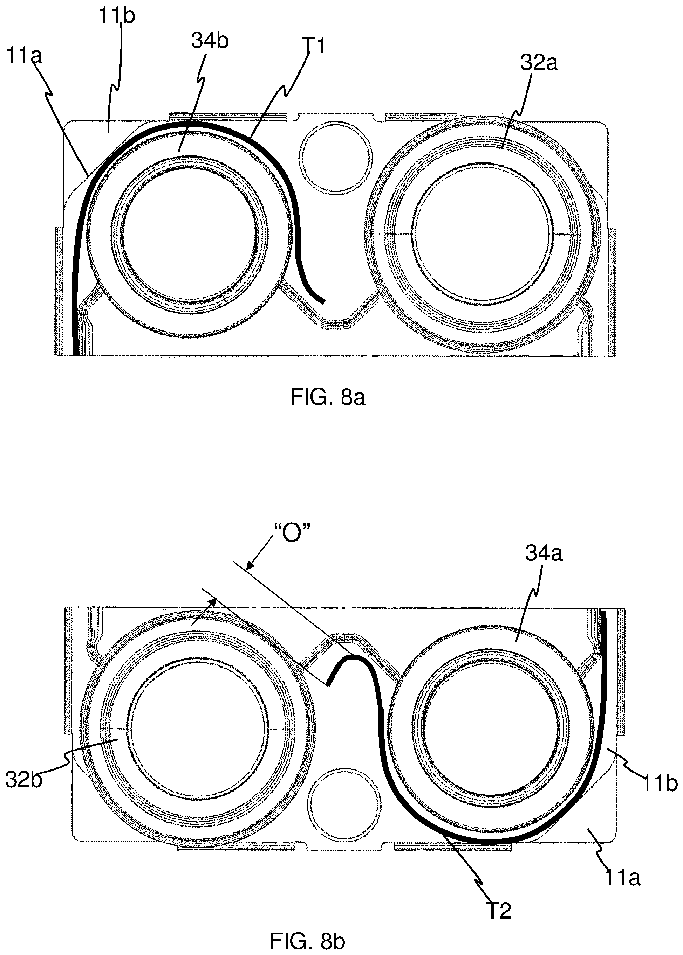

To address such problems, the welding trajectories are strategically defined spaced away from each other and non-interfering with respect to each other. To ensure that the welding trajectories T1 and T2 are not obstructed by the comparatively large first and third connectors 32a and 32b respectively, the welding trajectories are defined along at least a portion of the periphery of the second and fourth connectors 34b and 34a on the opposite walls 10a and 10b of the tank 10. The first connector 32a and the third connector 32b are strategically disposed on the opposite walls 10a, 10b of the tank 10 and spaced away from each other. Similarly, the second connector 34b and the fourth connector 34aare strategically disposed on the opposite walls 10b, 10a of the tank 10 and spaced away from each other. The first and second tank portions 11a and 11b are joined to each other by welding to form the tank 10 along first and second welding trajectories T1 and T2 along the periphery of the second connector 34b and the fourth connector 34a respectively. The connectors 32a and 34b are already secured to the first tank portion 11a and the connectors 34a and 32b are already secured to the second tank portion 11b before the tank portions 11a and 11b are joined for forming the tank 10. The first tank portion 11a and the second tank portion 11b are joined to each other by welding along first and second welding trajectories T1 and T2. The welding trajectories T1 and T2 are along at least a portion of periphery of the second connector 34b and the fourth connector 34a disposed abutting the opposite walls 10b and 10a of the tank 10 respectively as illustrated in FIG. 6 and FIG. 7. Particularly, the first tank portion 11a and the second tank portion 11b are secured to form the tank 10 by welding along the first and the second welding trajectories T1 and T2 configured on different and the opposite walls 10a and 10b of the tank 10. The welding trajectories T1 and T2 are overlapping "O" each other in different planes and between the first and the second connectors 32a and 34b. The overlap of the welding trajectories T1 and T2 ensures closing of the circuit and is depicted in FIG. 8b. With such configuration, the laser welding beam is able to reach the surface of the tank 10 at the interface between the tank 10 and the respective second connector 34b and the fourth connector 34aalong the periphery of the second connector 34b and the fourth connector 34a to configure robust welding connection between the first and second portions 11a and 11b of the tank 10. Also with such configuration, the welding trajectories T1 and T2 for welding the first and second tank portions 11a and 11b to configure the tank 10 are on different opposite walls 10a, 10b, and do not interfere with welding trajectories of any other welding joint configured on the tank 10.Accordingly, the problems of overheating during welding that lead to thermal stresses and welding defects such as hot cracking are avoided.

In case the tank 10 is formed by joining the panels or the tank portions 11a, 11b, the panels or tank portions 11a, 11b and joined to each other by laser welding along the welding trajectories T1 and T2 described above. However, the present invention is not limited to any particular configuration of the tank 10 and particular method of manufacturing the tank 10 as far as the tank 10 is formed by joining two tank portions 11a and 11b for configuring the first and second enclosures 12a and 12b for receiving corresponding first and second set of channels 22a and 22b of the tube 20.

Also, is disclosed a method 200 of assembling a heat exchanger, particularly, a battery cooler 100, in accordance with an embodiment of the present invention. FIG. 8 illustrates a block diagram depicting the various steps of the method 200. Particularly, the method 200 includes pre-assembling a first tank portion 11a and a second tank portion 11b formed with respective connectors. Particularly, pre-assembling the first tank portion 11a formed with the first and second connectors 32a and 34b and the second tank portion 11b formed with the third and fourth connectors 32b and 34a. Thereafter, the method 200 includes the step of joining the first tank portion 11a and the second tank portion 11b by welding along a first welding trajectory T1 and a second welding trajectory T2 that are configured on opposite walls of the tank 10 formed by joining the first tank portion 11a and the second tank portion 11b. The first and second welding trajectories T1 and T2 are non-interfering and over-lapping with respect to each other. Finally configuring other welding connections, for example welding connections between extreme ends of first and second set of channels 22a, 22b and the first and second enclosures 12a, 12b. Although, the various steps of the method 200 are depicted by blocks in the flow diagram and any number of steps described as method blocks can be combined in any order or can be performed in parallel to employ the method 200, or an alternative method. Additionally, individual blocks may be deleted from the flow chart depicting the method without departing from the scope and ambit of the present invention. The method 200 is to be understood with reference to the following description along with the Fig. 8.

The method 200 includes the step 102 of pre-assembling a pair of first tank portion 11a formed with the first and second connectors 32a and 34b and a second tank portion 11b formed with the the third and fourth connectors 32b and 34a secured thereto by using complementary engagement elements. Thereafter, the method 200 includes a step 104 of joining the first tank portion 11a and the second tank portion 11b by welding along the first welding trajectory T1 and the second welding trajectory T2. Particularly, the first welding trajectory T1 is along at least a portion of a periphery of a second connector 34b abutting a first wall 10a of the tank 10 opposite to a second wall 10b. The second welding trajectory T2 is along at least a portion of periphery of fourth connector 34a abutting a second wall 10b of the tank. The second connector 34b and the fourth connector 34a are comparatively smaller than the respective third connector 32b and the first connector 32a. The method 200 involves the step 106 of simultaneously forming a partition 10c to divide an interior of the tank 10 into a first enclosure 12a and a second enclosure 12b as the first and second tank portions 10a and 10b are joined to each other. The method 200 further includes the step 108 of securely receiving a first and a second set of channels 22a, 22b of a tube 20 in respective first and second enclosures 12a, 12b. Thereafter, the method 200 includes the step 110 of joining the first and a second set of channels 22a, 22b inside the respective first and second enclosures 12a, 12b.

In any case, the invention cannot and should not be limited to the embodiments specifically described in this document, as other embodiments might exist. The invention is defined by the appended claims.

## Claims

1. A heat exchanger (100) comprising:
• at least one tank (10) comprising:
∘ a first tank portion (11a) extending along the plane of the tank (10); and
∘ a second tank portion (11b) complementary to the first tank portion (11b),
wherein the first tank portion (11a) and the second tank portion (11b) are joined to define a first enclosure (12a) and a second enclosure (12b) between opposite walls (10a) and (10b) of the tank (10) and separate from each other, the first and second enclosure (12a) and (12b) having a closed end and an open end;
the tank (10) is formed with a first connector (32a) and a second connector (34b) on a first wall (10a) for ingress and egress of fluid with respect to the first and the second enclosures (12a) and (12b),
further, the tank (10) is formed with a third connector (32b) and a fourth connector (34a) on a second wall (10b) opposite to the first wall (10a) for ingress and egress of fluid with respect to the first and the second enclosures (12a) and (12b),
wherein the first connector (32a) and the third connector (32b) being of comparatively larger radial dimension than the respective fourth connector (34a) and second connector (34b),
• at least one tube (20) comprising a first set of channels (22a) and a second set of channels (22b) adapted to be received and joined to the first and the second enclosures (12a) and (12b) respectively,
**characterized in that** the first tank portion (11a) and the second tank portion (11b) are joined to each other by welding along a first and a second welding trajectories along at least a portion of a periphery of the second connector (34b) and the fourth connector (34a) respectively and wherein the first tank portion (11a) and the second tank portion (11b) are joined to each other by welding along the first and the second welding trajectories configured on the different walls (10a, 10b) of the tank (10) and overlapping each other in different planes and between the first and the second connectors (32a) and (34b).

2. The heat exchanger (100) as claimed in the previous claim, wherein the first tank portion (11a) and the second tank portion (11b) comprises complementary engaging elements (13a) and (13b) respectively adapted to pre-assemble the first tank portion (11a) and the second tank portion (11b) before joining the same.

3. The heat exchanger (100) as claimed in any of the preceding claims, wherein the first tank portion (11a) and the second tank portion (11b) are joined to each other to define a partition (10c) centrally disposed with respect to the tank (10), the first enclosure (12a) and the second enclosure (12b) are symmetrical about the partition (10c).

4. The heat exchanger (100) as claimed in the previous claim, wherein each tank portion (11a, 11b) is formed with a pair of spaced complementary recesses (11c, 11d) corresponding to the first and second connectors (32a, 34b) to define the first and second enclosures (12a, 12b) and the partition (10c) when the first and second tank portions (11a, 11b) are joined to each other.

5. The heat exchanger (100) as claimed in any of the preceding claims, wherein the first connector (32a) and the second connector (34b) are joined to the first tank portion (11a) by laser welding.

6. The heat exchanger (100) as claimed in any of the preceding claims, wherein the fourth connector (34a) and the third connector (32b) are joined to the second tank portion (11b) by laser welding.

7. The heat exchanger (100) as claimed in any of the preceding claims, wherein the tube (20) is an extruded tube and comprises the first set of channels (22a) joined to in fluid communication with the first enclosure (12a) and the second set of channels (22b) joined to and in fluid communication with the second enclosure (12b).

8. The heat exchanger (100) as claimed in any of the preceding claims, wherein outwardly facing side of tank portions (11a, 11b) define the opposite walls (10a, 10b) of the tank (10) when the first and second tank portions (11a) and (11b) are joined to each other.

9. The heat exchanger (100) as claimed in any of the preceding claims, wherein the first tank portion (11a) and the second tank portion (11b) are joined to each other by laser welding.

10. A method (200) of assembling a heat exchanger (100) as claimed in any of the preceding claims, the method comprising:
• a step (102) of pre-assembling a first tank portion (11a) and a second tank portion (11b) to configure pre-assembly of a tank (10), the pre-assembly of the tank (10) formed with first and second connectors (32a) and (34b) formed on one side thereof and third and fourth connectors (32b) and (34a) formed on opposite side thereof;
• a step (104) of joining the first tank portion (11a) and the second tank portion (11b) to form the tank (10), the first tank portion (11a) is joined to the second tank portion (11b) by welding along,
∘ a first welding trajectory T1 along at least a portion of a periphery of a second connector (34b) abutting a first wall (10a) of the tank (10) opposite to a second wall (10b);
∘ a second welding trajectory T2 along at least a portion of periphery of a fourth connector (34a) abutting the second wall (10b) of the tank (10); and
• wherein the second connector (34b) and the fourth connector (34a) are comparatively smaller than the respective third connector (32b) and the first connector (32a),simultaneously a step (106) forming a partition (10c) to divide an interior of the tank (10) into a first and a second enclosure (12a, 12b) when the first tank portion (11a) is joined to the second tank portion (11b);
• a step (108) of receiving of a first and a second set of channels (22a, 22b) of a tube (20) in respective first and second enclosures (12a, 12b); and
• a step (110) joining the first and a second set of channels (22a, 22b) inside the respective first and second enclosures (12a), 12b).

## Patentansprüche

1. Ein Wärmetauscher (100), umfassend:
- mindestens einen Tank (10), umfassend:
∘ einen ersten Tankabschnitt (11a), der sich entlang der Ebene des Tanks (10) erstreckt; und
∘ einen zweiten Tankabschnitt (11b), der komplementär zum ersten Tankabschnitt (11b) ist,
wobei der erste Tankabschnitt (11a) und der zweite Tankabschnitt (11b) verbunden sind, um eine erste Umschließung (12a) und eine zweite Umschließung (12b) zwischen gegenüberliegenden Wänden (10a) und (10b) des Tanks (10) zu definieren und voneinander getrennt sind, wobei die erste und zweite Umschließung (12a) und (12b) ein geschlossenes Ende und ein offenes Ende aufweisen;
- der Tank (10) ist mit einem ersten Anschluss (32a) und einem zweiten Anschluss (34b) an einer ersten Wand (10a) für den Ein- und Auslass von Fluid in Bezug auf die erste und die zweite Umschließung (12a) und (12b) ausgebildet,
ferner ist der Tank (10) mit einem dritten Anschluss (32b) und einem vierten Anschluss (34a) an einer zweiten Wand (10b) gegenüber der ersten Wand (10a) für den Ein- und Auslass von Fluid in Bezug auf die erste und die zweite Umschließung (12a) und (12b) ausgebildet,
wobei der erste Anschluss (32a) und der dritte Anschluss (32b) von vergleichsweise größerer radialer Dimension sind als der jeweilige vierte Anschluss (34a) und zweite Anschluss (34b),
- mindestens ein Rohr (20), umfassend einen ersten Satz von Kanälen (22a) und einen zweiten Satz von Kanälen (22b), die angepasst sind, um in die erste und die zweite Umschließung (12a) bzw. (12b) aufgenommen und mit diesen verbunden zu werden,
**dadurch gekennzeichnet, dass** der erste Tankabschnitt (11a) und der zweite Tankabschnitt (11b) durch Schweißen entlang einer ersten und einer zweiten Schweißbahn entlang mindestens eines Teils eines Umfangs des zweiten Anschlusses (34b) bzw. des vierten Anschlusses (34a) miteinander verbunden sind, und wobei der erste Tankabschnitt (11a) und der zweite Tankabschnitt (11b) durch Schweißen entlang der ersten und der zweiten Schweißbahn, die an den verschiedenen Wänden (10a, 10b) des Tanks (10) konfiguriert sind und sich in verschiedenen Ebenen überlappen und zwischen dem ersten und dem zweiten Anschluss (32a) und (34b) liegen, miteinander verbunden sind.

2. Der Wärmetauscher (100) nach dem vorhergehenden Anspruch, wobei der erste Tankabschnitt (11a) und der zweite Tankabschnitt (11b) komplementäre Eingriffselemente (13a) bzw. (13b) umfassen, die angepasst sind, um den ersten Tankabschnitt (11a) und den zweiten Tankabschnitt (11b) vor dem Verbinden derselben vorzumontieren.

3. Der Wärmetauscher (100) nach einem der vorhergehenden Ansprüche, wobei der erste Tankabschnitt (11a) und der zweite Tankabschnitt (11b) miteinander verbunden sind, um eine Trennwand (10c) zu definieren, die zentral in Bezug auf den Tank (10) angeordnet ist, wobei die erste Umschließung (12a) und die zweite Umschließung (12b) symmetrisch um die Trennwand (10c) angeordnet sind.

4. Der Wärmetauscher (100) nach dem vorhergehenden Anspruch, wobei jeder Tankabschnitt (11a, 11b) mit einem Paar beabstandeter komplementärer Aussparungen (11c, 11d) ausgebildet ist, die dem ersten und zweiten Anschluss (32a, 34b) entsprechen, um die erste und zweite Umschließung (12a, 12b) und die Trennwand (10c) zu definieren, wenn der erste und zweite Tankabschnitt (11a, 11b) miteinander verbunden sind.

5. Der Wärmetauscher (100) nach einem der vorhergehenden Ansprüche, wobei der erste Anschluss (32a) und der zweite Anschluss (34b) durch Laserschweißen mit dem ersten Tankabschnitt (11a) verbunden sind.

6. Der Wärmetauscher (100) nach einem der vorhergehenden Ansprüche, wobei der vierte Anschluss (34a) und der dritte Anschluss (32b) durch Laserschweißen mit dem zweiten Tankabschnitt (11b) verbunden sind.

7. Der Wärmetauscher (100) nach einem der vorhergehenden Ansprüche, wobei das Rohr (20) ein extrudiertes Rohr ist und den ersten Satz von Kanälen (22a), der in Fluidverbindung mit der ersten Umschließung (12a) verbunden ist, und den zweiten Satz von Kanälen (22b), der in Fluidverbindung mit der zweiten Umschließung (12b) verbunden ist, umfasst.

8. Der Wärmetauscher (100) nach einem der vorhergehenden Ansprüche, wobei die nach außen gerichtete Seite der Tankabschnitte (11a, 11b) die gegenüberliegenden Wände (10a, 10b) des Tanks (10) definiert, wenn der erste und zweite Tankabschnitt (11a) und (11b) miteinander verbunden sind.

9. Der Wärmetauscher (100) nach einem der vorhergehenden Ansprüche, wobei der erste Tankabschnitt (11a) und der zweite Tankabschnitt (11b) durch Laserschweißen miteinander verbunden sind.

10. Ein Verfahren (200) zum Zusammenbau eines Wärmetauschers (100) nach einem der vorhergehenden Ansprüche, wobei das Verfahren umfasst:
- einen Schritt (102) des Vormontierens eines ersten Tankabschnitts (11a) und eines zweiten Tankabschnitts (11b), um eine Vormontage eines Tanks (10) zu konfigurieren, wobei die Vormontage des Tanks (10) mit ersten und zweiten Anschlüssen (32a) und (34b), die auf einer Seite davon ausgebildet sind, und dritten und vierten Anschlüssen (32b) und (34a), die auf der gegenüberliegenden Seite davon ausgebildet sind, gebildet wird;
- einen Schritt (104) des Verbindens des ersten Tankabschnitts (11a) und des zweiten Tankabschnitts (11b), um den Tank (10) zu bilden, wobei der erste Tankabschnitt (11a) mit dem zweiten Tankabschnitt (11b) durch Schweißen entlang,
- einer ersten Schweißbahn T1 entlang mindestens eines Teils eines Umfangs eines zweiten Anschlusses (34b), der an eine erste Wand (10a) des Tanks (10) gegenüber einer zweiten Wand (10b) angrenzt;
- einer zweiten Schweißbahn T2 entlang mindestens eines Teils des Umfangs eines vierten Anschlusses (34a), der an die zweite Wand (10b) des Tanks (10) angrenzt; und
- wobei der zweite Anschluss (34b) und der vierte Anschluss (34a) vergleichsweise kleiner sind als der jeweilige dritte Anschluss (32b) und der erste Anschluss (32a), gleichzeitig ein Schritt (106) des Bildens einer Trennwand (10c), um ein Inneres des Tanks (10) in eine erste und eine zweite Umschließung (12a, 12b) zu teilen, wenn der erste Tankabschnitt (11a) mit dem zweiten Tankabschnitt (11b) verbunden wird;
- einen Schritt (108) des Aufnehmens eines ersten und eines zweiten Satzes von Kanälen (22a, 22b) eines Rohrs (20) in die jeweilige erste und zweite Umschließung (12a, 12b); und
- einen Schritt (110) des Verbindens des ersten und eines zweiten Satzes von Kanälen (22a, 22b) innerhalb der jeweiligen ersten und zweiten Umschließung (12a), 12b).

## Revendications

1. Un échangeur de chaleur (100) comprenant :
- au moins un réservoir (10) comprenant :
∘ une première partie de réservoir (11a) s'étendant le long du plan du réservoir (10) ; et
∘ une seconde partie de réservoir (11b) complémentaire à la première partie de réservoir (11b),
où la première partie de réservoir (11a) et la seconde partie de réservoir (11b) sont jointes pour définir une première enceinte (12a) et une seconde enceinte (12b) entre des parois opposées (10a) et (10b) du réservoir (10) et séparées l'une de l'autre, la première et la seconde enceinte (12a) et (12b) ayant une extrémité fermée et une extrémité ouverte ;
- le réservoir (10) est formé avec un premier connecteur (32a) et un deuxième connecteur (34b) sur une première paroi (10a) pour l'entrée et la sortie de fluide par rapport aux première et deuxième enceintes (12a) et (12b),
de plus, le réservoir (10) est formé avec un troisième connecteur (32b) et un quatrième connecteur (34a) sur une deuxième paroi (10b) opposée à la première paroi (10a) pour l'entrée et la sortie de fluide par rapport aux première et deuxième enceintes (12a) et (12b),
où le premier connecteur (32a) et le troisième connecteur (32b) étant de dimension radiale comparativement plus grande que le quatrième connecteur respectif (34a) et le deuxième connecteur (34b),
- au moins un tube (20) comprenant un premier ensemble de canaux (22a) et un deuxième ensemble de canaux (22b) adaptés pour être reçus et joints aux première et deuxième enceintes (12a) et (12b) respectivement,
**caractérisé en ce que** la première partie de réservoir (11a) et la seconde partie de réservoir (11b) sont jointes l'une à l'autre par soudage le long d'une première et d'une seconde trajectoire de soudage le long d'au moins une partie d'une périphérie du deuxième connecteur (34b) et du quatrième connecteur (34a) respectivement et où la première partie de réservoir (11a) et la seconde partie de réservoir (11b) sont jointes l'une à l'autre par soudage le long des première et seconde trajectoires de soudage configurées sur les différentes parois (10a, 10b) du réservoir (10) et se chevauchant dans différents plans et entre les premier et deuxième connecteurs (32a) et (34b).

2. L'échangeur de chaleur (100) selon la revendication précédente, où la première partie de réservoir (11a) et la seconde partie de réservoir (11b) comprennent des éléments d'engagement complémentaires (13a) et (13b) respectivement adaptés pour pré-assembler la première partie de réservoir (11a) et la seconde partie de réservoir (11b) avant de les joindre.

3. L'échangeur de chaleur (100) selon l'une quelconque des revendications précédentes, où la première partie de réservoir (11a) et la seconde partie de réservoir (11b) sont jointes l'une à l'autre pour définir une cloison (10c) disposée centralement par rapport au réservoir (10), la première enceinte (12a) et la seconde enceinte (12b) sont symétriques par rapport à la cloison (10c).

4. L'échangeur de chaleur (100) selon la revendication précédente, où chaque partie de réservoir (11a, 11b) est formée avec une paire de renfoncements complémentaires espacés (11c, 11d) correspondant aux premier et deuxième connecteurs (32a, 34b) pour définir les première et seconde enceintes (12a, 12b) et la cloison (10c) lorsque les première et seconde parties de réservoir (11a, 11b) sont jointes l'une à l'autre.

5. L'échangeur de chaleur (100) selon l'une quelconque des revendications précédentes, où le premier connecteur (32a) et le deuxième connecteur (34b) sont joints à la première partie de réservoir (11a) par soudage laser.

6. L'échangeur de chaleur (100) selon l'une quelconque des revendications précédentes, où le quatrième connecteur (34a) et le troisième connecteur (32b) sont joints à la seconde partie de réservoir (11b) par soudage laser.

7. L'échangeur de chaleur (100) selon l'une quelconque des revendications précédentes, où le tube (20) est un tube extrudé et comprend le premier ensemble de canaux (22a) joint en communication fluidique avec la première enceinte (12a) et le deuxième ensemble de canaux (22b) joint et en communication fluidique avec la seconde enceinte (12b).

8. L'échangeur de chaleur (100) selon l'une quelconque des revendications précédentes, où le côté orienté vers l'extérieur des parties de réservoir (11a, 11b) définit les parois opposées (10a, 10b) du réservoir (10) lorsque les première et seconde parties de réservoir (11a) et (11b) sont jointes l'une à l'autre.

9. L'échangeur de chaleur (100) selon l'une quelconque des revendications précédentes, où la première partie de réservoir (11a) et la seconde partie de réservoir (11b) sont jointes l'une à l'autre par soudage laser.

10. Une méthode (200) d'assemblage d'un échangeur de chaleur (100) selon l'une quelconque des revendications précédentes, la méthode comprenant :
- une étape (102) de pré-assemblage d'une première partie de réservoir (11a) et d'une seconde partie de réservoir (11b) pour configurer le pré-assemblage d'un réservoir (10), le pré-assemblage du réservoir (10) formé avec les premier et deuxième connecteurs (32a) et (34b) formés sur un côté de celui-ci et les troisième et quatrième connecteurs (32b) et (34a) formés sur le côté opposé de celui-ci ;
- une étape (104) de jonction de la première partie de réservoir (11a) et de la seconde partie de réservoir (11b) pour former le réservoir (10), la première partie de réservoir (11a) est jointe à la seconde partie de réservoir (11b) par soudage le long,
- d'une première trajectoire de soudage T1 le long d'au moins une partie d'une périphérie d'un deuxième connecteur (34b) aboutant à une première paroi (10a) du réservoir (10) opposée à une seconde paroi (10b) ;
- d'une seconde trajectoire de soudage T2 le long d'au moins une partie de la périphérie d'un quatrième connecteur (34a) aboutant à la seconde paroi (10b) du réservoir (10) ; et
- où le deuxième connecteur (34b) et le quatrième connecteur (34a) sont comparativement plus petits que le troisième connecteur respectif (32b) et le premier connecteur (32a), simultanément une étape (106) formant une cloison (10c) pour diviser un intérieur du réservoir (10) en une première et une seconde enceinte (12a, 12b) lorsque la première partie de réservoir (11a) est jointe à la seconde partie de réservoir (11b) ;
- une étape (108) de réception d'un premier et d'un deuxième ensemble de canaux (22a, 22b) d'un tube (20) dans les première et seconde enceintes respectives (12a, 12b) ; et
- une étape (110) de jonction du premier et du deuxième ensemble de canaux (22a, 22b) à l'intérieur des première et seconde enceintes respectives (12a), 12b).
